# EUROPEAN PATENT SPECIFICATION

(11) **EP 1 562 320 B1**
(45) Date of publication and mention of the grant of the patent: **02.05.2007**
(21) Application number: 04006261.4
(22) Date of filing: 16.03.2004
(51) Int. Cl.: H04L 9/32, G06F 1/00

(54) **Verification result recording method and apparatus for creating signature verification log**
Verfahren zur Aufzeichnung von Prüfungsergebnis und Vorrichtung zur Erzeugung von Signatur-Prüfungslogdatei
Méthode et appareil d'enregistrement de résultats de vérification pour créer un fichier de vérification de signatures

(30) Priority: 05.02.2004 JP 2004028794
(43) Date of publication of application: 10.08.2005
(73) Proprietor: Hitachi, Ltd., Chiyoda-ku, Tokyo 101-8010 (JP)
(72) Inventor: Tanimoto, Koichi, Tokyo (JP); Miyazaki, Kunihiko, Tokyo (JP); Itoh, Shinji, Tokyo (JP); Omoto, Narihiro, Tokyo (JP)
(74) Representative: Strehl Schübel-Hopf & Partner

(56) References cited:
- EP-A- 1 094 424
- US-A1- 2002 023 221
- US-A1- 2003 182 552

## Description

### BACKGROUND OF THE INVENTION

This invention relates to a digital signature technology.

EP 1094424 A2, JP 2001-331104, (corresponding to EP 1094424 A2), and JP 2001-331105 teach a technology for improving an evidential property of a digital signature (hereinafter called "signature"), a method that reflects signature log information up to creation of a signature on the signature when the signature is created, and adds afresh the information about the signature created as a signature log entry to the signature log. The signature created by this method has a chain structure and alteration becomes difficult. When verification of the signature is made, verification of the chain is made, too, in addition to verification of the signature and strict verification can be made against alteration. This technology makes it possible to keep the evidential property of an electronic document for a long time and is called a "hysteresis signature technology".

When making verification of the signature, this technology judges that all the signatures chained to a reliable signature are reliable. Data necessary for strict signature verification inclusive of verification of the chain are a verification object signature, verification object data and a signature log. In this technology, the signature log recording past signatures is the foundation for keeping the evidential property. To create a reliable signature as a starting point of chain verification, it may be possible to employ a method that publicizes a part of the signature log through a publishing organization as a third party.

### SUMMARY OF THE INVENTION

When the signature log is lost for some reason or other in the technology described above, it becomes difficult to verify those signatures verification of which has been possible in the past. It is therefore desirable to keep the evidential property of the signatures that have once been verified in the past even when the signature log is lost.

The invention provides a technology that insures an evidential property of a signature that has once been verified in the past for a long time. More concretely, data used for verification is left as a log and the log is utilized for insuring the evidential property for a long time.

In other words, the invention provides a verification record preservation function capable of keeping for a long time an evidential property of a verified signature when a signature created by utilizing a hysteresis signature technology is verified.

In the invention, the term "signature log entry" means signature information created by individual signatures created or received and the term "signature log" means a file storing a plurality of "signature log entries". It will be assumed that among the signature log entries in the signature log, the latest signature log entry is publicized in a predetermined interval through a publishing organization and the publishing organization insures reliability of the signature log entry publicized.

When the signature based on the hysteresis signature technology is verified after the passage of an extend period of time in the invention, a publishing organization side apparatus in the signature log verifies whether or not matching of a chain can be established from the signal record reliability of which is insured to the signature log entry having a verification object signature. The verification record preservation function according to the invention records the signature log entries used for verification, the signature log entries publicized in the publishing organization side apparatus and the verification object signature to the verification log.

Accordingly, even when the signature log is lost, authenticity of the signature described in the verification log can be demonstrated by examining the verification log. Even when the verification log is lost, it can be restored by verifying again the signature log.

The invention provides also service forms of a publishing organization for insuring reliability of signatures. In other words, the publishing organization side apparatus in the invention reliably creates a reliable signature, prevents users from forgetting publication, executes verification in place of the users and provides a system of a reliable verification service by taking convenience for the users into account. Provision of such services can insure the evidential property of the signature once verified for long time without the necessity for again making verification.

According to the invention, even when evidence information such as the signature log is lost, the evidential property can be kept for a long time by utilizing the verification log created at the time of past verification.

Other objects, features and advantages of the invention will become apparent from the following description of the embodiments of the invention taken in conjunction with the accompanying drawings.

### BRIEF SECRIPTION OF THE DRAWINGS

Fig. 1 is a schematic view of a system to which a first embodiment is applied;
Fig. 2 is a structural view of a user side apparatus in the first embodiment;
Fig. 3 is a schematic view of a hysteresis signature technology;
Fig. 4 shows a publication mechanism of a publishing organization side apparatus;
Fig. 5 is a flowchart and conceptual view for explaining a chain verification procedure inclusive of creation of a verification log;
Fig. 6 shows the content of the verification log;
Fig. 7 shows service forms of a publishing organization side apparatus in the embodiment;
Fig. 8 is a structural view of the publishing organization side apparatus in the embodiment;
Fig. 9 is a flowchart of a publication processing of the publishing organization side apparatus;
Fig. 10 shows a publication database of the publishing organization side apparatus;
Fig. 11 is a flowchart of a publication reminder processing of the publishing organization side apparatus;
Fig. 12 is a flowchart of a publication notice processing of the publishing organization side apparatus;
Fig. 13 shows a publication notice request database of the publishing organization side apparatus;
Fig. 14 is a flowchart of a verification vicarious execution request reception processing of a verification vicarious execution processing of the publishing organization side apparatus;
Fig. 15 is a flowchart of a signature verification processing of the verification vicarious execution processing of the publishing organization side apparatus;
Fig. 16 shows a verification status database of the publishing organization side apparatus; and
Fig. 17 shows an example of verification vicarious execution.

### DESCRIPTION OF THE EMBODIMENT

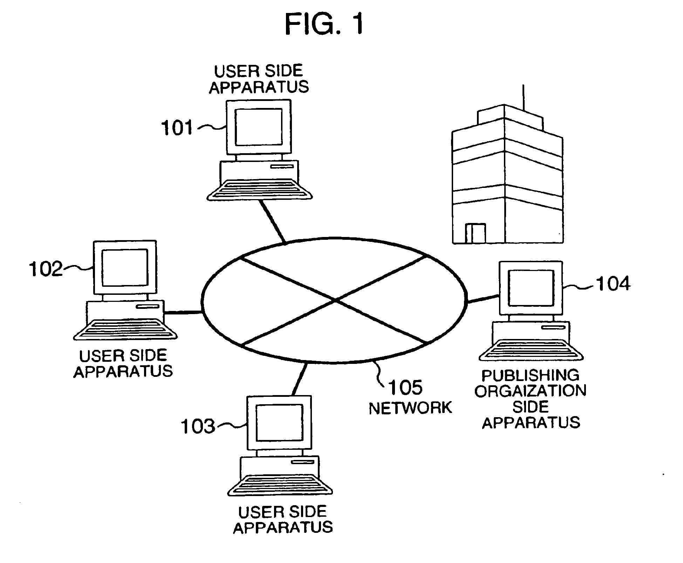

Fig. 1 is a schematic view of a hysteresis signature system according to an embodiment of the invention.

As shown in the drawing, the hysteresis signature system includes user side apparatuses 101 to 103 for performing signature creation, signature verification, verification record preservation and publication of the signature log entries, and a publishing organization side apparatus 104 for publicizing the signature log entry sent from each user. The user side apparatuses 101 to 103 and the publishing organization side apparatus 104 are connected to one another through a network 105 such as the Internet.

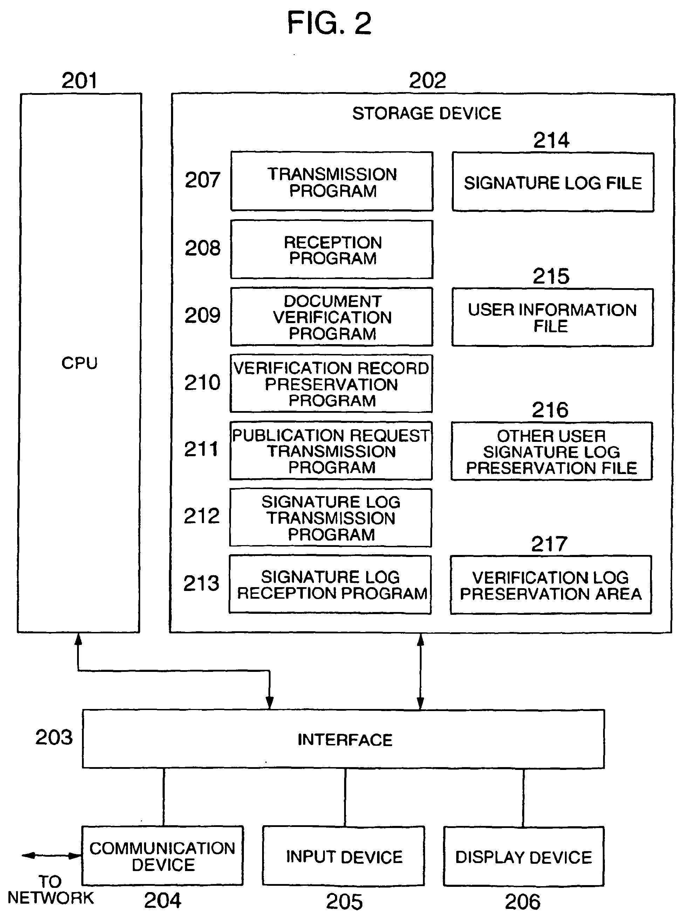

As shown in Fig. 2, each user side apparatus 101 to 103 includes a storage device 202, a communication device 204 for communicating with other device through the network, an input device 205 such as a keyboard and a mouse, a display device 206 such as a display, a CPU 201 and an interface 203 for connecting these devices to one another.

The storage device 202 stores a transmission program 207 for creating a signature and transmitting a signed document, a reception program 208 for receiving the signed document and verifying the signature, a document verification program 209 for verifying a signature log inclusive of chain verification, a verification record preservation program 210 for recording data used for verification to a verification log, a publication request transmission program 211 for creating a publication request and transmitting a publication signature log entry to the publishing organization side apparatus 104, a signature log transmission program 212 for transmitting own signature log of a user to other users, a signature log reception program 213 for receiving signature log of other users from the other users, a signature log file (called "signature log") 214, a user information file 215 and other user signature log preservation file 216 for preserving the signature log received from the other users.

Processing of each program 207 to 213 in the following explanation is accomplished on the user side apparatuses 101 to 103 when the CPU 201 executes each program that is called through the interface 203. Each program may be stored in advance in the storage device 202 or may be introduced through a medium each user side apparatus 101 to 103 can utilize. The medium includes a storage medium detachable to the publishing organization side apparatus 104, a network connected to the communication device 204 and a communication medium such as a carrier wave propagating through the network.

These programs utilize the hysteresis signature technology that reflects signature log information when the signature is made. The user side apparatuses are divided into the user side apparatus of a signer (hereinafter called "signer side apparatus") and the user side apparatus of a verifying party (hereinafter called "verifier side apparatus"). The signer side apparatus represents the user side apparatus creating the signature and the verifier side apparatus represents the user side apparatus verifying the signature. When the signer side apparatus verifies the signature made by the signer side apparatus itself, however, the signer side apparatus is the same as the verifier side apparatus.

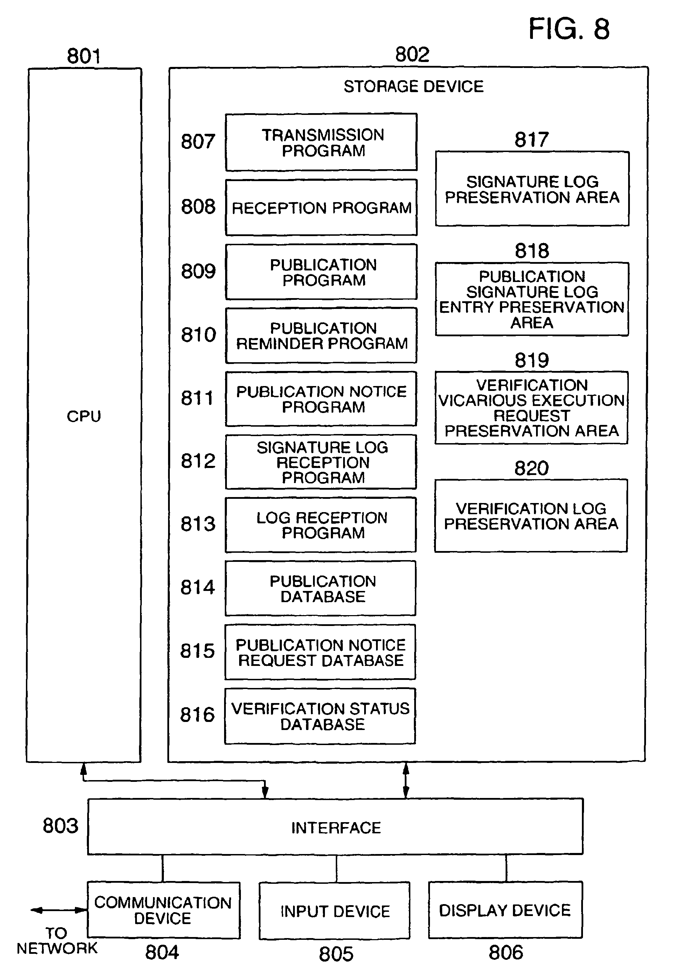

Incidentally, the construction of the publishing organization side apparatus 104 will be explained later with reference to Fig. 8.

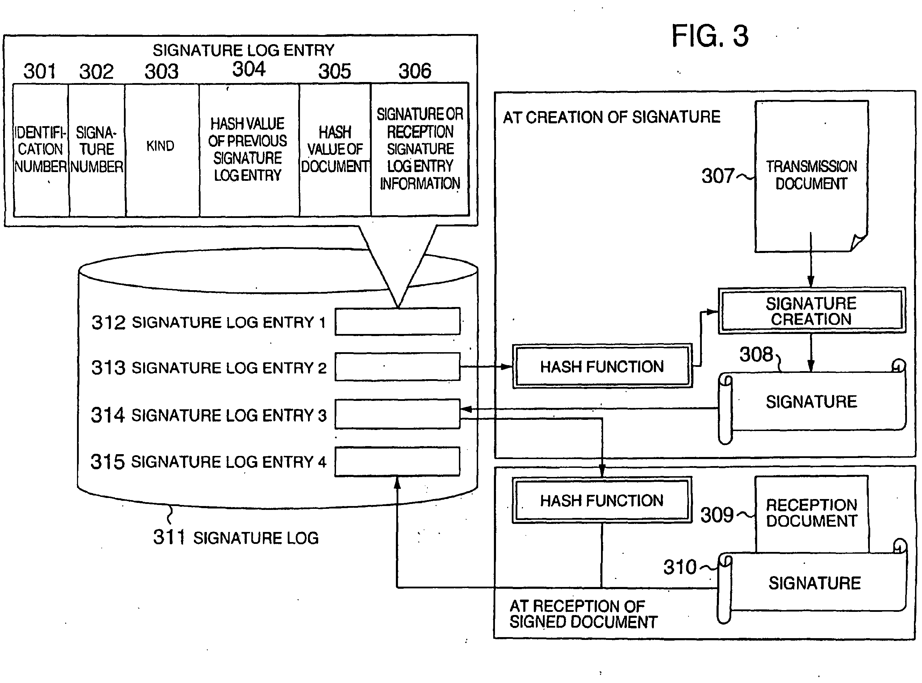

Fig. 3 shows the signature log when the user side apparatuses 101 to 103 of the signer create the signature 308 for the transmission document 307, receive the signed reception document 309 and verify the signature. In this case, the user side apparatuses 101 to 103 are the signer side apparatuses at the time of creation of the signature and are the verifier side apparatuses at the time of reception of the signed document. When creating the signature, the signer side apparatus creates the signature 308 by causing a secrete key to operate on the transmission document 307 and a hash value of a previous signature log entry 313 by a processing of the transmission program 207. After the signature 308 is created, a signature log entry 314 is created from the previous signature log entry 313 and the signature 308 created this time and is added to the signature log 311.

Receiving the signature, the verifier side apparatus verifies the signature 310 for the reception document 309 with a public key by a processing of the reception program 208. After verification, a signature log entry 315 is created from a hash value of the previous signature log entry 314 and the signature 310 and is added to the signature log 311. The signature log entry recording the signature information is created in this way when the signature is created or received. Since the previous signature information is utilized for creating the signature next time, a chain relation occurs among the signatures. Verification of the signatures can be executed more reliably by verifying this chain relation (hereinafter called "chain verification") in addition to signature verification using the ordinary public key.

The signature log entry in the user side apparatuses 101 to 103 include "identification number 301" representing information such as a signature algorithm, "signature number 302" representing the creation order of the signature, "kind 303" representing whether the signature log entry is created at the time of signature creation (transmission) or at the time of signature verification (reception), "hash value 304 of previous signature log entry" utilized for chain verification, "hash value 305 of signature creation object document (called "document hash value")" and "signature or reception signature log entry information 306" (signature created at the time of creation of signature, and combination of signature number of signature received and hash value of signature log entry for the signature at the time of signature verification). Incidentally, in order to identify which signature remains in which signature log entry, the signature number of the signature log entry added afresh this time to the signature log when the signature is created is added to the signature created. The signature log is the file to which the signature log entries created are serially recorded.

The user side apparatuses 101 to 103 deposit periodically the latest signature log entry to a reliable third system apparatus such as the publishing organization side apparatus 104 in accordance with a predetermined rule. More concretely, the user side apparatuses 101 to 103 acquire the latest signature log entry from their own signature log 214 by executing the publication request transmission program 211 and transmit the publication request inclusive of the signature log entry to the publishing organization side apparatus 104. The publishing organization side apparatus 104 publicizes the received signature log entries of the user side apparatus 101 to 103. The signature log entry deposited and publicized to the publishing organization side apparatus 104 is called the "deposited publication signature log entry".

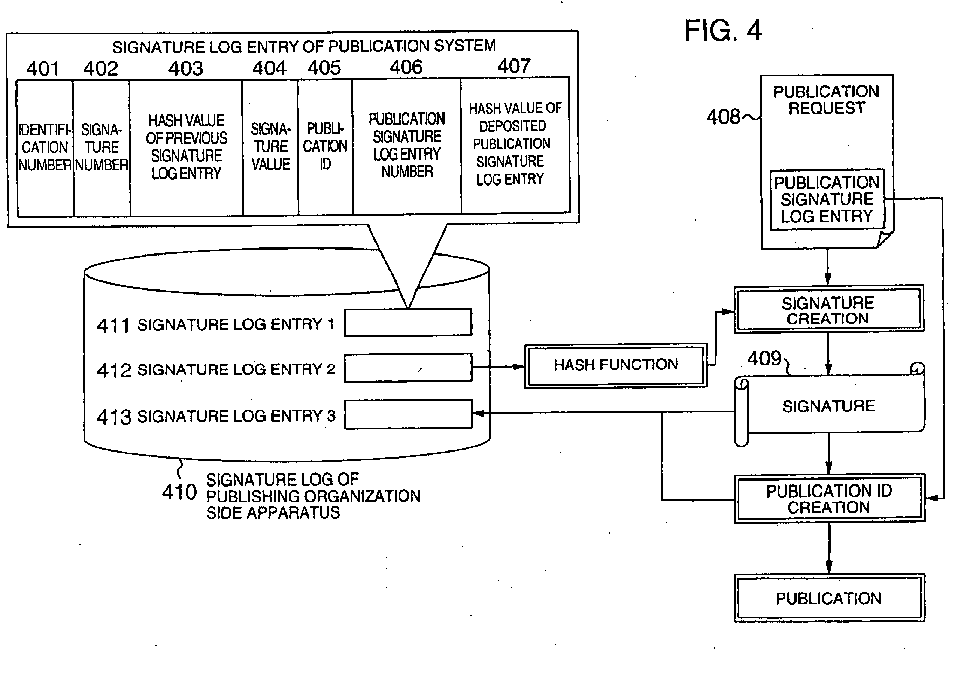

The publishing organization side apparatus 104, too, can further improve authenticity of the deposited publication signature log entry of the user by utilizing the hysteresis signature. Fig. 4 shows the mode of publication by the publishing organization side apparatus 104.

Receiving the publication request 408 to which the deposited publication signature log entry is added from the user side apparatuses 101 to 103, the publishing organization side apparatus 104 executes the publication program 809, allows the secrete key of the publishing organization side apparatus 104 to act on the hash value of the publication request 408 and the previous signature log entry 412 and creates the signature 409.

The publishing organization side apparatus 104 creates an inherent public ID determined for each publication request. The publishing organization side apparatus 104 creates the signature log entry 413 from the signature 409 created, the publication ID and the deposited publication signature log entry and records it to the signature log 410 of the publishing organization side apparatus 104. Finally, the deposited publication signature log entry, the publication ID and the user name (or mail address) of the transmitting party of the publication request are publicized.

Web is preferred as the destination of publication to newspapers in which the position of insertion is limited. Since the publication ID is inherent to each publication request, the publication ID makes it possible to associate the deposited publication signature log entry publicized on the Web with the signature log entry of the publishing organization side apparatus 104.

The signature log entry in the publishing organization side apparatus 104 includes "identification number 401" representing information such as signature algorithm, "signature number 402" representing the order of creation of the signature log entry, "hash value 403 of previous signature log entry" utilized for chain verification, "signature value 404", "publication ID 405" created for each publication request, "publication signature log entry number 406" as the signature number of the deposited publication record publicized and "hash value 407 of deposited publication signature log entry" as the hash value of the deposited publication signature log entry publicized. The file recording serially the signature log entries is the signature log 410 of the publishing organization side apparatus 104.

When such a publication processing is executed, the publishing organization side apparatus 104 records the information publicized in the signature log and constitutes the chain relation among the log entries. Therefore, the latest signature log entries (such as the hash value of the latest signature log entries) in the signature log 410 of the publishing organization side apparatus 104 are periodically publicized on newspapers and publications (hereinafter generically called "newspapers") to make the signature log entries more reliable. It is further possible to verify through the chain verification of the signature log that the publishing organization does not by itself do anything wrong. The signature log entries publicized on the newspapers and publications will be hereinafter called "newspaper publication signature log entries".

Because it is extremely difficult to later cancel or alter the newspaper publication signature log entries, the newspaper publication signature log entries can be said as having high reliability. When the verifier side apparatus conducts the chain verification, it verifies the chain from the newspaper publication signature log entry to the signature log entry as the object of signature verification. When the chain is confirmed, the signature log entry as the object of signature verification can be judged as having reliability equivalent to that of the newspaper publication signature log entry and correctness is insured.

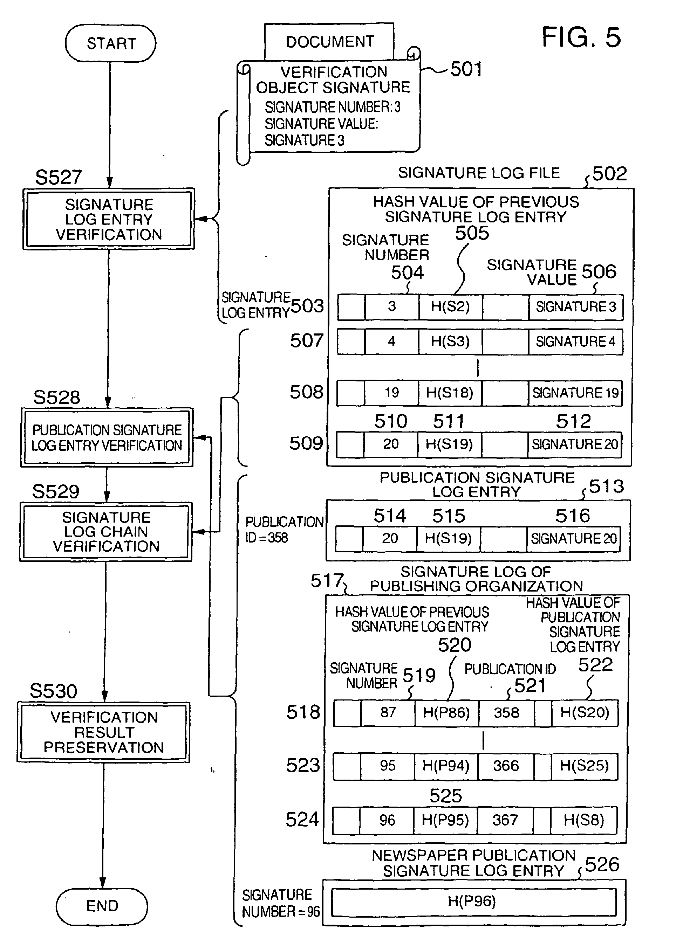

Fig. 5 shows the procedure of the chain verification in the user side apparatus.

After verifying the verification object signature by the public key of the signer, the verifier side apparatus verifies in Step S527 whether or not the verification object signature 501 (corresponding to 310 in Fig. 3; = "signature 3") of the signed document coincides with the signature value 506 (corresponding to 306 in Fig. 3; = "signature 3") of the signature log entry 503 in the signature log 502 of the signer side apparatus having the corresponding signature number (= "3"). Here, the signature log 502 of the signer side apparatus is acquired from the signer side apparatus before verification.

The verifier side apparatus verifies in Step S528 the signature log entries from the newspaper publication signature log entry to the signature log entry 509 in the signature log 502 of the signer side apparatus corresponding to the deposited publication signature log entry 513 of the signer side apparatus deposited to the publishing organization. More concretely, the publication ID (= "358") publicized with the deposited publication signature log entry 513 of the signer side apparatus is first acquired and then the signature number (= "87") of the item 519 (corresponding to 402 in Fig. 4) of the signature log entry 518 in which the publication ID (= "358") is recorded is acquired.

Next, the newspaper publication signature log entries 526 (= "signature number 96") having the signature numbers after the signature number "87" so acquired are acquired from the newspapers. Whether or not the hash value of the signature log entry 524 having the same signature number (= "96") as the newspaper publication signature log entry 526 in the signature log entry of the publishing organization side apparatus 104 coincides with the newspaper publication signature log entry 526 is verified.

Next, whether or not the hash value (= "H(P95)") of the previous signature log entry of the item 525 (corresponding to 403 in Fig. 4) in the signature log entry 524 of the publishing organization side apparatus 104 coincides with the hash value of the signature log entry 523 just ahead of the former is verified. A processing for examining matching between the signature log entry and the signature log entry just before the former by use of a hash function is repeatedly executed for the signature log entry of the publishing organization side apparatus 104 from the signature log entry 524 having the signature number (= "96") corresponding to the newspaper publication signature log entry to the signature log entry 518 having the signature number (= "87") corresponding to the deposited publication signature log entry. Whether or not the hash value (= "H(S20))" ) of the publication signature log entry of the item 522 (corresponding to 407 in Fig. 4) in the signature log entry 518 of the publishing organization side apparatus 104 coincides with the hash value of the deposited publication signature log entry 513 is verified. Finally, whether or not the deposited publication signature log entry 513 coincides with the signature log entry 509 (= signature number "20") in the signature log 502 of the corresponding signer side apparatus is verified.

The verifier side apparatus acquires in Step 528 the deposited publication signature log entry 513 of the signer side apparatus, the signature log 517 of the publishing organization and the newspaper publication signature log entry 526 necessary for verification from the publishing organization side apparatus and the newspaper before verification.

The verifier side apparatus verifies in Step S529 whether or not the hash value (= "H(S19)") of the previous signature log entry of the item 511 (corresponding to 304 in Fig. 3) in the signature log entry 509 of the signature log of the signer side apparatus coincides with the hash value of the signature log entry 508 just ahead of the former. A processing for examining matching between the signature log entry and the signature log entry just ahead of the former by use of a hash function is repeatedly executed from the signature log entry 509 having the signature number (= "20") corresponding to the deposited publication signature log entry 513 to the signature log entry 503 having the signature number (= "3") corresponding to the verification object signature 501.

When all the verification results by the processing of the document verification programs 209 in Steps S527, S528 and S529 prove successful, the chain verification in the verification object signature is successful.

The data necessary for the chain verification described above are "verification object signature 501 (corresponding to 304 in Fig. 3)", "signature log 502 (signature log entries 503 and 507 to 509)", "deposited publication signature log entry 513", "signature log 517 of the publishing organization side apparatus 104 (signature log entries 518, 523 and 524)" and "newspaper publication signature log entry 526". The verifier side apparatus records these five kinds of data to the verification log in Step 530 by the processing of the verification record preservation program 210. The verification log so created is preserved in a verification log preservation area 217.

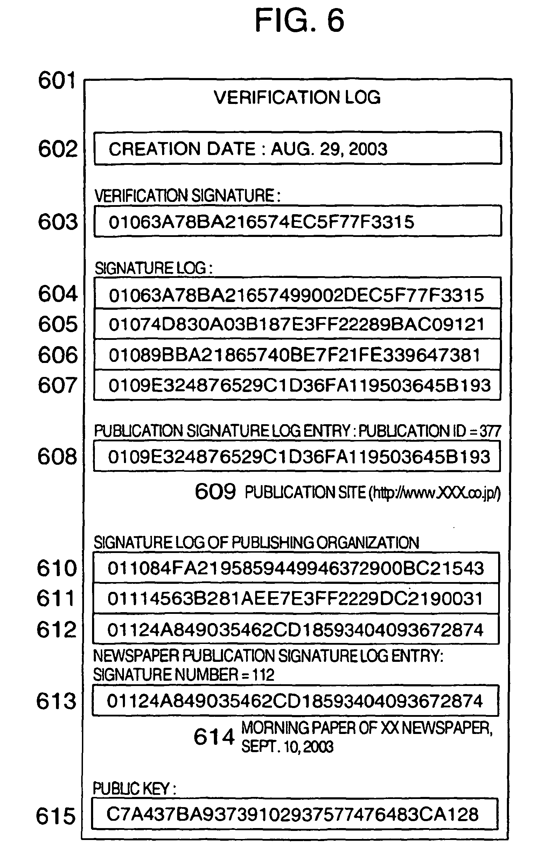

Fig. 6 shows a structural example of the verification log. In the verification log 601, reference numeral 603 (corresponding to 310 in Fig. 3 and 501 in Fig. 5) denotes the verification object signature. Reference numerals 604 to 607 denote the signature log entries of the signer side apparatus of the verification object signature used for the chain verification. Reference numeral 608 (corresponding to 513 in Fig. 5) denotes the deposit public signature log entry, which is recorded with the public ID. Reference numerals 610 to 612 denote the signature log entries of the publishing organization side apparatus 104. Reference numeral 613 (corresponding to 526 in Fig. 5) denotes the newspaper publication signature log entry, which is recorded with the signature number. Additional information such as a verification log creation date 602, a publication site 609 of the deposited publication signature log entry, a newspaper company name 614 inserting the newspaper publication signature log entry and a public key 615 used for verification may be recorded, as well.

The verification log 601 records the data necessary for the signature verification inclusive of the chain verification for the verification object signature 603 (corresponding to 310 in Fig. 3 and 501 in Fig. 5). Therefore, the verification side apparatus executes again the procedure of the chain verification explained with reference to Fig. 5 by using the data described in this log and can verify the signature 603 (corresponding to 310 in Fig. 3 and 501 in Fig. 5) described in the verification log and authenticity of the verification log. In other words, the verification log is an authenticity certificate of the signature.

The verification object signature 603 (corresponding to 310 in Fig. 3 and 501 in Fig. 5) described in the verification log can be verified by using the signature log entries 604 to 607, the deposited publication signature log entry 608 (corresponding to 513 in Fig. 5), the signature log entries 610 to 612 of the publishing organization side apparatus 104, the newspaper publication signature log entry 613 and the public key 615. When the newspaper publication signature log entry 613 (corresponding to 526 in Fig. 5) described in the verification log coincides with the signature log entry described in the newspaper, the verification object signature 603 described in the verification log can be said as authentic. Even when the signature log of the signer side apparatus disappears, the method according to this embodiment can submit authenticity of the signature described in the verification log by extracting the data used for verification from the verification log and conducting the signature verification using the public key and the verification of Steps S527, S528 and S529.

When the verification log disappears earlier, the verifier side apparatus can re-construct the verification log by again conducting the chain verification and by using the verification record preservation function.

The signature log does not contain those kinds of information that may result in leakage of the secret key or leakage of privacy so that it may be laid open to public. Therefore, even when the verification log is laid open, leakage of the secret key and privacy does not occur. Therefore, the verifier side apparatus may publicize the verification log so as to let the third party conduct verification.

When the verification log is altered, the verifier side apparatus cannot conduct verification using the verification log after alteration for the verification object signature 603 (corresponding to 310 in Fig. 3 and 501 in Fig. 5). Because matching of the chain from the deposited publication signature log entry to the verification object signature cannot be established, however, verification of the illegal signature does not prove successful. The verification log represents the verification result about only the verification object signature described therein. Therefore, even when the verification log is altered, no influences are exerted on the verification result of signatures other than the signature described in the verification log.

The user side apparatus (signer side apparatus or verifier side apparatus, or both) may as well preserve the verification log but safety can be further improved by depositing the verification log for the important documents to the reliable, public third system or by asking the reliable, pubic third system to put the signature. The verification log does not contain those kinds of information that may result in leakage of the secret key or leakage of privacy. Therefore, there is no possibility of leakage of the secrete key and privacy when the verification log is deposited.

The publishing organization side apparatus 104 is a third party system side apparatus that receives the signature log entry from the user and publicizes the signature log entry. The signature log entry publicized is called "deposited publication signature log entry". When each user utilizes the deposited publication signature log entry as the starting point of the chain verification of the signature, the signature that can be traced from the deposited publication signature log entry through the chain can acquire reliability equivalent to that of the signature log entry publicized in the publishing organization side apparatus and can guarantee long term evidential property of the signature.

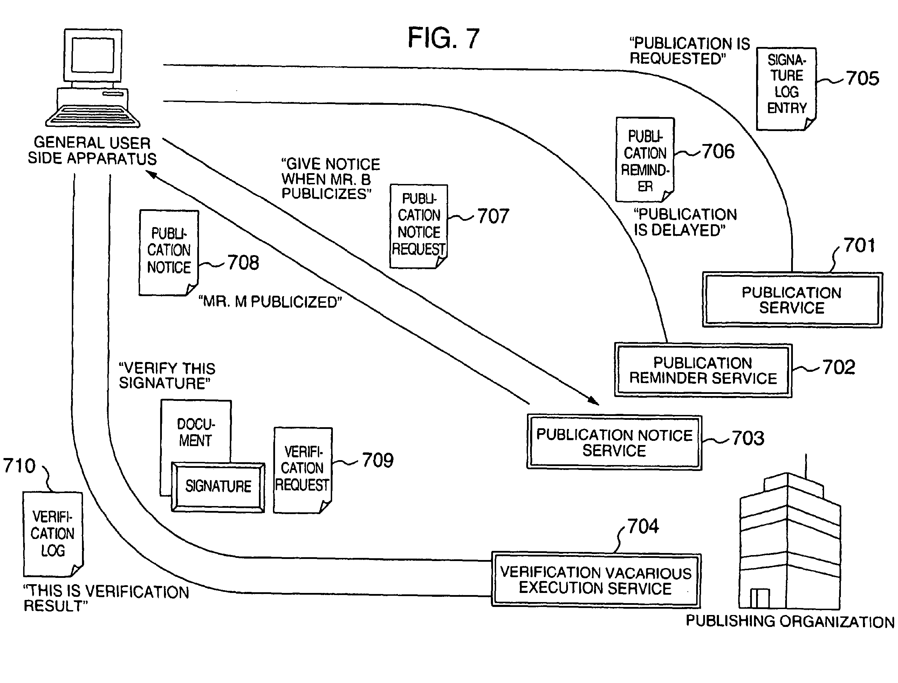

The publishing organization side apparatus 104 may provide the following services shown in Fig. 7. By providing such services, the user side apparatus can acquire the following effects.

In the embodiment described above, the publication timing of the deposited publication signature log entry depends on the transmission of the deposited publication signature log entry from the user side apparatus. According to the services shown in Fig. 7, the chain verification does not become difficult even when the user side forgets publication.

The point at which the chain verification of the signature becomes possible is the point at which the signer side apparatus creates the deposited publication signature log entry by using the publishing organization side apparatus after the signature is created. According to the services shown in Fig. 7, the verifier side apparatus needs not to confirm whether or not the signature log entry of the signer side apparatus is publicized in order to know if the chain verification becomes possible even when the signer side apparatus of the signature of the verification object and the verifier side apparatus are different.

In the case of the hystresis signature, the signature log of the signer side apparatus and the deposited publication signature log entry of the signer side apparatus are necessary to verify the signature. According to the services shown in Fig. 7, however, the verifier need not collect these data even when the signer side apparatus of the signature of the verification object and the verifier side apparatus are different, and can perform verification even when the signer is non-cooperative.

Fig. 8 shows the construction of the publishing organization side apparatus 104 used for the services shown in Fig. 7.

As shown in Fig. 8, the publishing organization side apparatus 104 includes a storage device 802, a communication device 804 for making communication with other devices through a network, an input device 805 such as a keyboard and a mouse, a display device 806 such as a display, a CPU 801 and an interface 803 for connecting these devices. The storage device 802 stores a transmission program 807 for creating a signature and transmitting a signed document, a reception program 808 for receiving the signed document and verifying the signature, a publication program 809 for publicizing a deposited publication signature log entry 705 (corresponding to 513 in Fig. 5) received from a user on a Web, etc, a publication reminder program 810 for transmitting a publication reminder 706 to a user for which publication is not made for a predetermined time, a publication notice program 811 for transmitting a publication notice 708 to the user sending a publication notice request 707, a verification vicarious execution program 812 for verifying the verification object signature and sending a verification log describing a verification result, a signature log reception program 813 for accepting the signature log from the user, a publication database 814 recording publication information of each user, a publication notice request database 815 recording information of the user sending the publication notice request and a publication notice processing condition, a verification condition database 816 recording information of the user sending a verification vicarious execution request and a verification vicarious execution processing condition, a signature log preservation area 817 for preserving the signature log received from the user, a publication signature log entrying preservation area 818 for preserving the deposited publication signature log entrying received from the user, a verification vicarious execution request preservation area 819 for preserving the verification vicarious execution request received from the user, and a verification log preservation area 820 for preserving a verification log created by the publishing organization side apparatus 104 or deposited from the user.

The processing of each program in the following explanation is accomplished on the publishing organization side apparatus 104 as the CPU 801 executes each program. Each program may be stored in advance in the storage device 802 or may be introduced through a medium that the publishing organization side apparatus 104 can utilize. The medium includes a storage medium detachable to the publishing organization side apparatus 104, a network connected to the communication device 804 or a communication medium such as a carrier wave propagating through the network, for example.

The publication service 701 is the service in which the publishing organization side apparatus 104 receives the deposited publication signature log entry 705 (corresponding to 513 in Fig. 5) from the user and preserves it in its own database or publicizes it on the Web, etc. The user can create the signature log entry having high reliability as the starting point of the chain verification in its own signature log by utilizing this service.

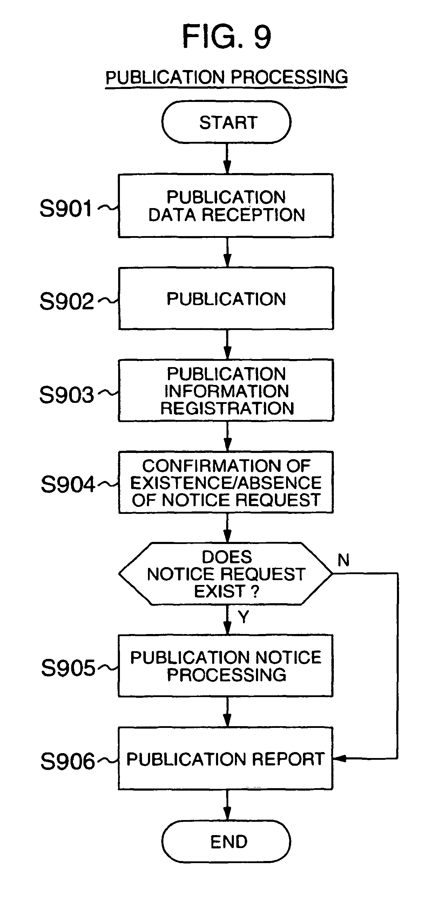

Fig. 9 shows the flow of the publication processing.

When providing the publication service 701, the publishing organization side apparatus 104 executes the publication processing in the following steps S901 to S906.

The publishing organization side apparatus 104 receives the data (deposited publication signature log entry) requested for publication from the user in Step S901 and preserves the data received or publicizes it on the Web, etc in S902. In this instance, an inherent ID (item 1003) for identification is allocated to the deposited publication signature log entry. The deposited publication signature log entry is preserved with the publication ID in the publication signature log entry preservation area 818.

The publishing organization side apparatus 104 publicizes the data (deposited publication signature log entry) in Step S902 and registers in Step S903 a user name (item 1002), a publication ID (item 1003), a signature number (items 302 and 1004) of a deposited publication signature log entry, a publication date (item 1006), a publication site (or preservation site) (item 1005) of the publicized data to a publication database 814 of the publishing organization side apparatus 104.

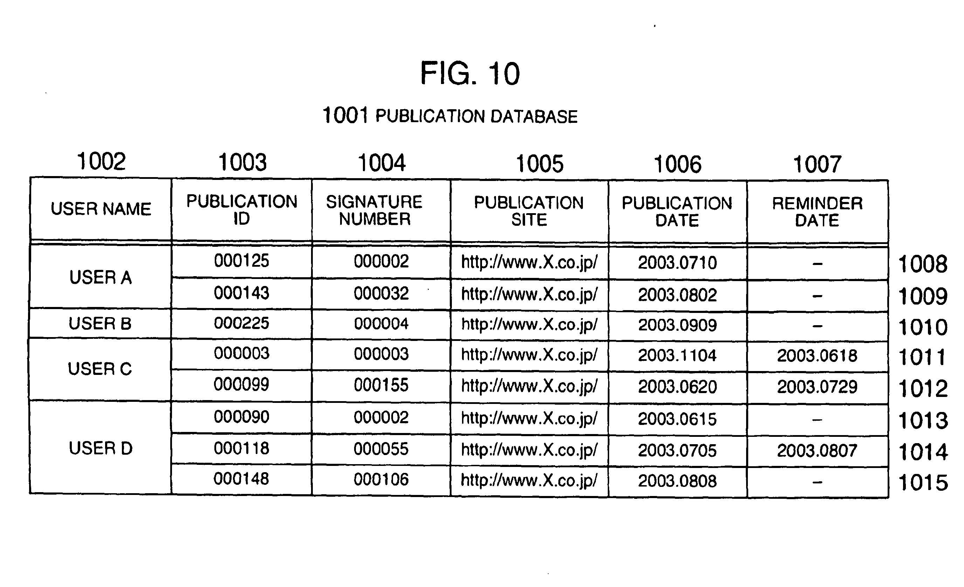

Fig. 10 shows a structural example of the publication database. The publication ID 1003 for each user, the signature number 1004 (corresponding to 302 in Fig. 3) of the deposited publication signature log entry publicized, the publication site 1005 and the publication date 1006 are recorded to the publication database. It is possible by looking up this publication database to know which user publicizes which information at which site.

In the next step S904, the publishing organization side apparatus 104 looks up the publication notice request database 815, examines whether or not the publication notice request exists from other users for the user relating to publication of this time and executes the publication notice processing (S1203 and S1204) when the publication notice request exists. The detail of the publication notice request database 815 and the detail of the publication notice processing will be described in a later-appearing publication notice service.

In Step S904, the publishing organization side apparatus 104 confirms the notice request of the user relating to publication of this time and proceeds to S906 when the publication notice request from other users does not exist.

In Step S906, the publishing organization side apparatus 104 generates a document stating that the publication data is received and is normally publicized, and transmits it to the publication request user.

The publication reminder service 702 is the service in which the publishing organization side apparatus 104 reminds the user, for which publication is not made for a predetermined time, of publication. It is thus possible to prevent the user from forgetting publication and to prevent the situation in which the chain verification becomes difficult due to the absence of tee deposited publication signature log entry.

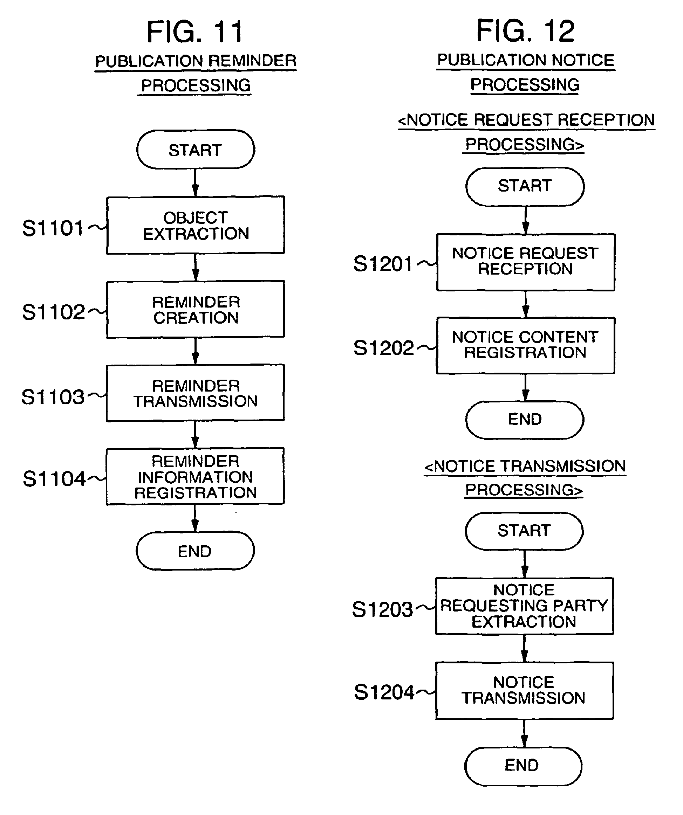

Fig. 11 shows the flow of the publication reminder processing.

When executing the publication reminder service 702, the publishing organization side apparatus 104 executes the publication reminder service of the following Steps S1101 to S1104 by the publication reminder program 810.

In Step S1101, the publishing organization side apparatus 104 looks up the item "publication date" (1006) and the item "reminder date" (1007) for the latest publication data of each user of the publication database 1001 to which the deposited publication signature log entry is registered in S903 and extracts the user name for which a predetermined period (one month, for example) passes.

Assuming that the present time is September 10, 2003 in the example shown in Fig. 10, the time of one month or more has lapsed from the previous publication for the records 1009 and 1015 among the latest publication data (records 1009, 1010, 1012, 1015) and the time of one month or more has lapsed from the previous reminder date for the record 1012. Therefore, a user A, a user C and a user D are extracted from the item "user name" (1002) of the respective records.

The publishing organization side apparatus 104 generates in Step S1102 a publication reminder 706 (document urging publication) to be transmitted to the users that are extracted in S1101 and transmits the publication reminder in S1103. Association of the user name and the transmission destination (mail address, etc) may be made by adding afresh an item to the database 1001 and recording the transmission destination or a database for associating the user name and the transmission destination (mail address, etc) may be generated separately.

Finally, to record the transmission of the publication reminder, the publishing organization side apparatus 104 records the publication reminder transmission date to the item "reminder date" of the latest record as the object of reminder for each user reminded.

The publication notice service 703 is the service in which the publishing organization side apparatus 104 notifies other user of publication of a certain user in accordance with the publication notice request 707 through the publication notice 708. Receiving the notice of publication of the deposited publication signature log entry of the signer side apparatus from the publishing organization side apparatus 104, the verifier side apparatus can know that the chain verification of the verification object signature becomes possible by using the signature log of the signer side apparatus.

Fig. 12 shows the flow of the publication notice processing.

When making the publication notice service 703, the publishing organization side apparatus 104 executes the publication notice processing of the following Step S1201 to S1204 by the execution of the publication notice program 811.

In Step S1201, the publishing organization side apparatus 104 receives from the user A the publication notice request to the effect that "Please give a notice when the deposited publication signature log entry of the user B is publicized next". Then, the publishing organization side apparatus 104 registers in Step S1202 the content of this publication notice request to the publication notice request database 815.

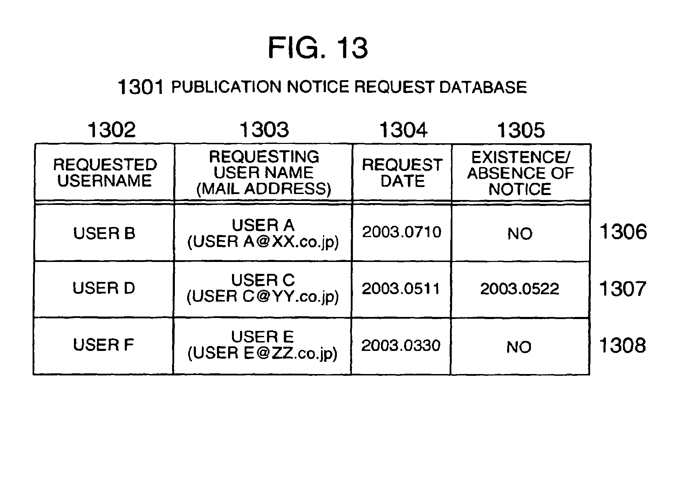

Fig. 13 shows the construction of the publication notice request database 1301 (815 in Fig. 8). A publication party as the object of the publication notice, i.e. "requested user name" (1302), publication notice requesting party information, i.e. "publication requesting user name (mail address)" (1303), "request date" (1304) representing the date of the publication notice request and "existence/absence of notice" (1305) representing whether or not the publication notice is made are registered to the publication notice request database 1301. In the example described above, the requested user name is "user B" and the publication notice requesting user name is "user A".

In the publication processing shown in Fig. 9, the publishing organization side apparatus 104 looks up the publication notice request database 1301 in Step S904 and examines whether or not the publication notice request for the publication signature log entry publicized this time from other user exists. When it does, the publishing organization side apparatus 104 executes the following notice transmission processing.

In S1203, the publishing organization side apparatus 104 first extracts the user requesting the notice for publication this time (publication about the user side apparatus requesting publication of the deposited publication signature log entry). When the publication party of this time is the user B, for example, the user A is extracted from the item "requesting user name" (1303) of the record 1306 in which the item "requested user name" (1302) of the publication notice request database is the user B.

When the item "existence/absence of notice" (1305) extracted in S1203 is "Not", the publishing organization side apparatus 104 transmits in S1204 the publication notice 708 to the user extracted in S1203. After transmission, the publishing organization side apparatus 104 records the transmission date to the item "existence/absence of notice" of the record extracted in S1203.

The verification vicarious execution service 704 is the service in which the publishing organization side apparatus 104 verifies the signature in place of the user (verifier) side apparatus. This service can reduce the troubles such as collection of the signature log and the deposited publication signature log entry of the signer side apparatus that are necessary for verification. When the publishing organization side apparatus 104 that is the public third party apparatus publicizes the verification result as the aforementioned verification log, effectiveness of the signature can be guaranteed with higher reliability and the verification result can be guaranteed for an extended period. Because the verification log so publicized describes the data used for verification, not only the publishing organization side apparatus 104 but also all parties can re-examine the content.

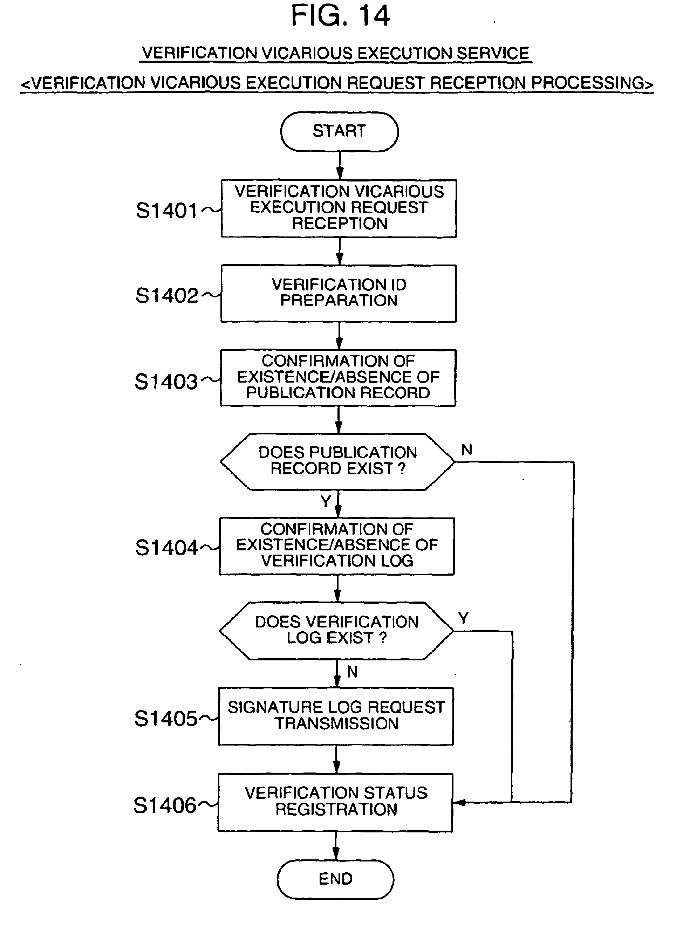

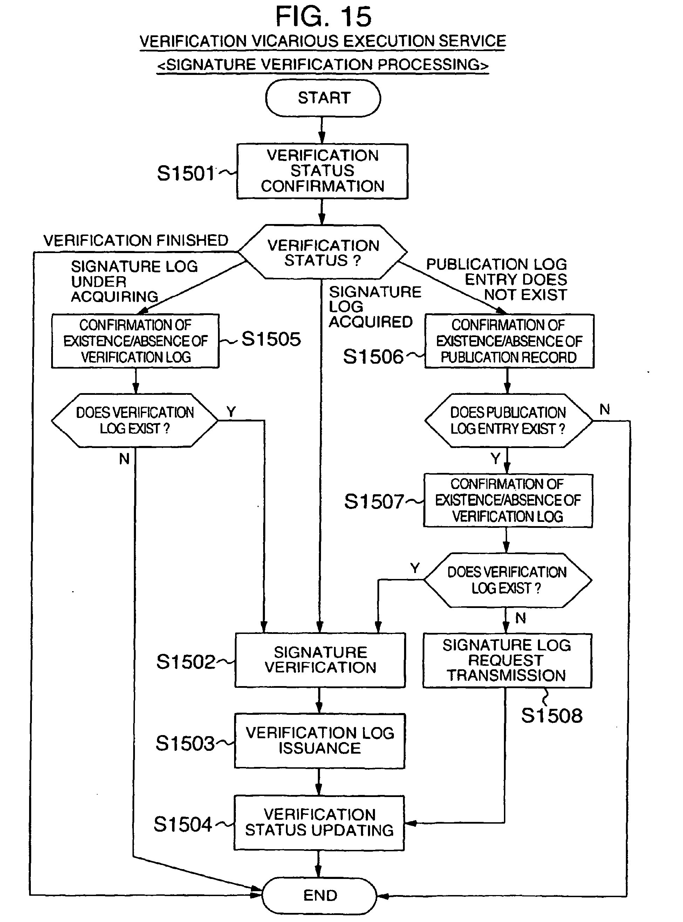

The verification vicarious execution service can be divided into a verification vicarious execution request reception processing and a signature verification processing. Fig. 14 shows the flow of the verification vicarious execution request reception processing and Fig. 15 shows the flow of the signature verification processing.

When executing the verification vicarious execution service 704, the publishing organization side apparatus 104 executes the verification vicarious execution request reception processing of the following Steps S1401 to S1406 and the signature verification processing of the following Steps S1501 to 1508 by the verification vicarious execution program 812.

In Step S1401, the publishing organization side apparatus 104 receives the verification vicarious execution request 709 from the verifier side apparatus. The verification vicarious execution request describes a verification object signed document, a signer name (mail address) and a verification vicarious execution requesting party name (mail address).

In Step S1402, the publishing organization side apparatus 104 allocates an inherent verification ID to the verification vicarious execution request received in S1401. The verification vicarious execution request imparted with the verification ID is preserved in a verification vicarious execution request preservation area 819.

In Step S1403, the publishing organization side apparatus 104 examines whether or not the publication data (deposited publication signature log entry (corresponding to 513 in Fig. 5) requested for publication by the signer side apparatus of the verification object signature exists after the signature number (item 302) of the verification object signature by means of the item "user name" (1002) and the item "signature number" (1004 (corresponding to 302 in Fig. 3)) of the publication database 1001. More concretely, the record having the same user name as the signer of the verification object signature is extracted and the item "signature number" (1004 (corresponding to 302 in Fig. 3)) of the record so extracted is examined. The record having the signature number greater than, and most approximate to, the signature number of the verification object signature is extracted. When the publication data of the object does not exist, the flow proceeds to S1406.

In Step S1404, the publishing organization side apparatus 104 examines whether or not the signature log capable of verifying the verification object signature exists in the signature log preservation area 817. More concretely, it examines whether or not the signature log that is the signature log of the signer side apparatus of the verification object signature and contains the range from the signature number of the verification object signature to the signature number of the record extracted in S1403 exists in the signature log preservation area 817. When such a signature log exists, the flow proceeds to S1406 and if it does not, the publishing organization side apparatus 104 requests the signer side apparatus of the verification object signature to send the signature log containing the range from the signature number of the verification object signature to the signature number of the record extracted in S1403.

In Step S1406, the publishing organization side apparatus 104 records the verification status of the present stage to the verification status database.

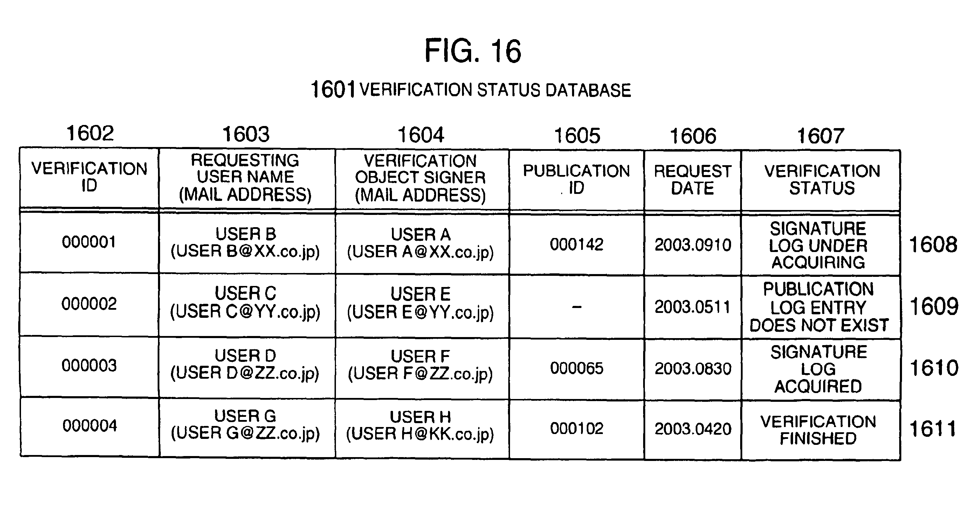

Fig. 16 shows the construction of the verification status database 1601 (816 in Fig. 8). The "verification ID" (1602) generated in S1402, "requesting user name" (1603) representing the verification vicarious execution requesting party, "verification object signer" (1604) representing the signer of the verification object signature, "publication ID" (1605) representing the publication ID of the publication signature log entry used for verification, "request date" (1606) representing the verification request date and "verification status" (1607) representing the verification status are recorded to the verification status database 1601. The verification ID 1602 associates the verification vicarious execution request with the record of the verification status database. Various kinds of information such as "publication record: No" representing that the deposited publication signature log entry does not exist in S1403, "signature log: acquired" representing that the signature log exists in S1404, "signature log: under acquiring" representing that the signature log does not exist in S1404 and the signature log is now requested to the signer side apparatus of the verification object signature and "verification: complete" representing that verification has already been finished are recorded to the verification status 1607.

The following signature verification processing is executed for the verification vicarious execution request for which the verification vicarious execution request reception processing is completed.

The timing of the signature verification processing includes a timing immediately after the finish of the verification vicarious execution request reception processing, a predetermined interval such as every other day, or the timing at which the signature log requested in S1405 is sent from the user and the signature log reception program 813 stores the signature log received in the signature log preservation area 817.

The signature log reception program 813 of the publishing organization side apparatus 104 preserves the signature log received and the sender name in the signature log preservation area 817 and record "signature log: acquired" in the item "verification status" (1607) of the corresponding record of the verification status database 1601. The term "corresponding record" represents the record in which the item "verification object signer" (1604) of the verification status database 1601 is the same as the signature log sender and the range from the signature number of the verification object signature of the verification vicarious execution request (preserved in the verification vicarious execution request preservation area) corresponding to the item "verification ID" (1602) to the signature number of the deposited publication signature log entry (preserved in the publication signature log entry preservation area) corresponding to the item "publication ID" (1605) is contained in the signature log received by the signature log reception program.

In the signature verification process, the publishing organization side apparatus 104 first extracts in Step S1501 the corresponding record (the verification ID of which is coincident with the verification ID of the verification vicarious execution request; called "verification object record") for the verification vicarious execution request to be verified from now on by looking up the verification ID 1602 in the verification status database 1601 and confirms the verification status 1607. The signature (the signature for which the user requests verification) annexed to the verification vicarious execution request will be hereinafter called verification object signature".

When the verification status 1607 is "publication record: No" in S1501, the flow proceeds to S1506 and the publishing organization side apparatus 104 examines whether or not the deposited publication signature log entry requested by the signer side apparatus of the verification object signature for verification exists after the signature number (item 402) of the verification object signature of the verification vicarious execution request from the item "user name" (1002) and the item "signature number" (1004) of the publication database 1001. More concretely, the publishing organization side apparatus 104 extracts the record having the same user name as the signer of the verification object signature, examines the item "signature number" (1004) for the record so extracted and extracts the record having the signature number greater than, and most approximate to, the signature number of the verification object signature. The signature verification processing is finished when the intended deposited publication signature log entry does not exist.

In S1506, when the corresponding deposited publication signature log entry of the signer side apparatus of the verification object signature exists, the publishing organization side apparatus 104 examines in S1507 whether or not the signature log capable of verifying the verification object signature exists in the signature log preservation area 817. More concretely, the publishing organization side apparatus 104 examines whether or not the signature log that is the signature log of the signer side apparatus of the verification object signature and contains the range from the signature number of the verification object signature to the signature number of the record extracted in S1506 exists in the signature log preservation area.

When such a signature log exists, the flow proceeds to S1502. When not, the publishing organization side apparatus 104 requests in S1508 the signer side apparatus of the verification object signature to send the signature log containing the range from the signature number of the verification object signature to the signature number of the record extracted in S1506. The flow then proceeds to S1504. In Step S1504, the publishing organization side apparatus 104 extracts the record having the verification ID that is coincident with the verification ID of the verification vicarious execution request of the verification object by looking up the verification ID 1602 in the verification status database 1601, records "signature log: acquiring" in the verification status 1607 and finishes the signature verification processing.

When the verification status 1607 is "signature log: acquiring" in S1501, the flow proceeds to S1505 and the publishing organization side apparatus 104 examines whether or not the signature log capable of verifying the verification object signature exists in the signature log preservation area 817. More concretely, the publishing organization side apparatus 104 examines whether or not the signature log that is the signature log of the signer side apparatus of the verification object signature and contains the range from the signature number of the verification object signature to the signature number of the deposited publication signature log entry of the signer side apparatus of the verification object signature exists in the signature log preservation area.

Here, the signature number of the deposited publication signature log entry of the signer side apparatus of the verification object signature is determined in the following way. First, the verification ID of the verification vicarious execution request of the verification object is acquired and the corresponding record (having the verification ID coincident with the verification ID of the verification vicarious execution request) is extracted from the verification status database 1601 by looking up the verification ID 1602. The publication ID 1605 is acquired in the record so extracted.

Next, in the publication database 1001, the corresponding record (having the publication ID coincident with the publication ID 1605 of the record extracted from the verification status database) is extracted and the signature number 1004 of its record is acquired. This signature number is the signature number of the deposited publication signature log entry of the signer side apparatus of the verification object signature. When the signature log capable of verifying the verification object signature exists in the signature log preservation area 817, the flow proceeds to S1502 and when not, the signature verification processing is finished.

When the verification status 1607 is "signature log: acquired" in S1501, the flow proceeds to S1502.

When the verification status 1607 is "verification: finished" in S1501, the signature verification processing is finished.

In S1502, the publishing organization side apparatus 104 acquires the verification object signature 501 (corresponding to 310 in Fig. 3) from the verification vicarious execution request and acquires the signature log that is the signature log of the item "verification object signer" (1604) of the verification object record extracted in S1501 and contains the range from the signature number of the verification object signature to the signature number of the deposited publication signature log entry of the signer side apparatus of the verification object signature.

Here, the signature number of the deposited publication signature log entry of the signer side apparatus of the verification object signature is determined in the following way. First, the verification ID of the verification vicarious execution request of the verification object is acquired and the corresponding record (having the verification ID coincident with the verification ID of the verification vicarious execution request) is extracted from the verification status database 1601 by looking up the verification ID 1602. The publication ID 1605 is acquired in the record so extracted.

Next, in the publication database 1001, the corresponding record (having the publication ID coincident with the publication ID 1605 of the record extracted from the verification status database) is extracted and the signature number 1004 of its record is acquired. This signature number is the signature number of the deposited publication signature log entry of the signer side apparatus of the verification object signature.

The deposited publication signature log entry 513 corresponding to the publication ID 1605 in the verification object record is acquired from the publication signature log entry preservation area. The processing of S527, S528 and S529 shown in Fig. 5 are executed by using the verification object signature 501 (corresponding to 310 in Fig. 3) of the data so acquired, the signature log 502 of the signer side apparatus of the verification object signature, the deposited publication signature log entry 513 of the signer side apparatus of the verification object signature, the signature log 517 of the publishing organization side apparatus 104 and the newspaper publication signature log entry 526 to verify the verification object signature.

A verification log describing the data "verification object signature 501 (corresponding to 310 in Fig. 3)", "signature log 502 (signature log entries 503 and 507 to 509)", "deposited publication signature log entry 513", "signature log 517 of publishing organization side apparatus 104" and "newspaper publication signature log entry 526" used for verification in S1502 is generated and the verification log 710 (corresponding to 601 in Fig. 6) so generated is transmitted to the verification vicarious execution requesting user by looking up the item "requesting user name (mail address)" (1603) of the verification object record.

Finally, "verification: finished" is recorded in S1504 to the item "verification status" (1607) of the verification object record.

After the signature verification processing is finished, the record the verification status of which does not become "verification: finished" even after the passage of a predetermined period is extracted by looking up the item "request date" (1606) in the verification status database and a document stating the failure of verification is transmitted to the verification vicarious execution requesting party 1603 for the verification vicarious execution request corresponding to the extracted record.

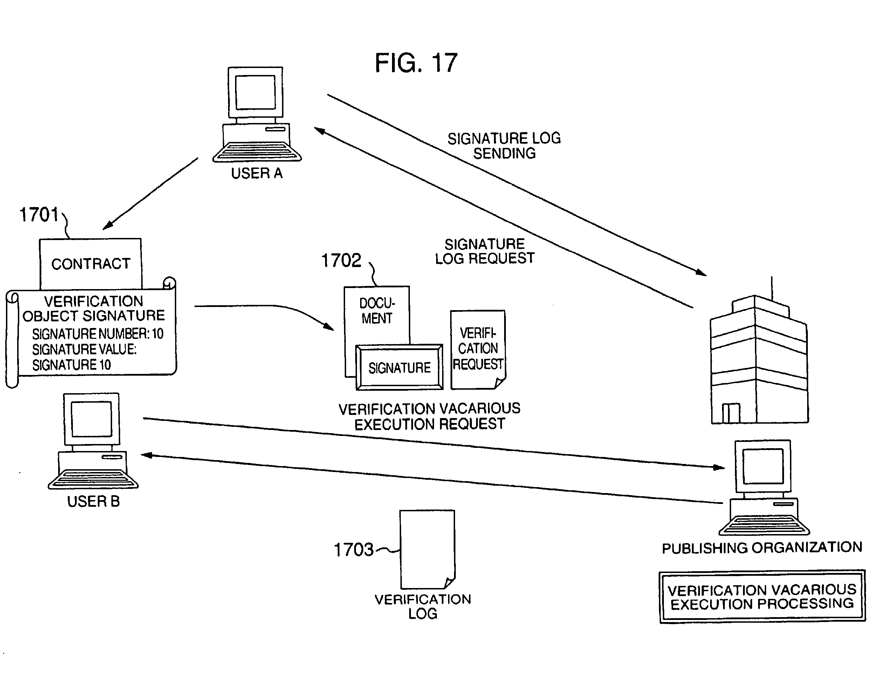

The flow of the verification vicarious execution in this embodiment under the following condition will be described with reference to Fig. 17.

It will be assumed hereby that a user B side apparatus received three month ago a hysteresis signed contract of A (effective term: 5 years) from a user A side apparatus. The hysteresis signature is a signature technology that keeps effectiveness for a long time. To verify the signature created by the user A side apparatus, the user A side apparatus must completely preserve the signature log and the evidential property of the contract depends on keeping of the signature log by the user A side apparatus. To improve the evidential property of the contract in such a case, the user B side apparatus can request the verification vicarious execution to the publishing organization side apparatus 104 and can get issuance of the verification log.

The user B side apparatus creates the verification vicarious execution request 1702 (corresponding to 709 in Fig. 7) annexed with the hysteresis signed contract (hereinafter called "verification object signature"; signature number "10") and transmits it to the publishing organization side apparatus 104.

Receiving the verification vicarious execution request 1702 (corresponding to 709 in Fig. 7) from the user B side apparatus, the publishing organization side apparatus 104 executes the verification vicarious execution processing shown in Figs. 14 and 15 by the processing of the verification vicarious execution program 812. The publishing organization side apparatus 104 creates the verification ID in S1402 for the verification vicarious execution request 1702 (corresponding to 709 in Fig. 7) received in S1401. In this embodiment, the verification ID "000001" is created. The verification vicarious execution request 1702 (corresponding to 709 in Fig. 7) is preserved with the verification ID "000001" in the verification vicarious execution request preservation area 819 of the publishing organization side apparatus 104.

The publishing organization side apparatus 104 examines whether or not the deposited publication signature log entry requested for publication by the signer side user A side apparatus of the verification object signature after the signature number ("10") of the verification object signature exists by the item "user name" (1002) and the item "signature number" (1004) of the publication database 1001. As a result, the record 1009 is the corresponding record because the item "user name" is "user A" and the item "signature number" is "32" and greater than the signature number "10" of the verification object signature.

In S1404, the publishing organization side apparatus 104 examines whether or not the signature log that is the signature log of the signer "user A" of the verification object signature and contains the range from the signature number "10" of the verification object signature to the signature number "32" of the record extracted in S1403 exists in the signature log preservation area 817 of the publishing organization side apparatus 104. Since such a signature log does not exist in this embodiment, the publishing organization side apparatus 104 requests in S1405 the signer "user A" of the verification object signature to send the signature log containing the range from the signature number "10" of the verification object signature to the signature number "32" of the record extracted in S1403.

In S1406, the publishing organization side apparatus 104 records the verification status of the present stage to the verification status database 1601 and finishes the verification vicarious execution request reception processing. The recording result in this embodiment is the record 1608. The content includes "verification ID" (= 000001), "requesting user name" (= user B), "verification object signer" (= user A), "publication ID" (= 000142), "request date" (= September 10, 2003) and "verification status" (= signature log: acquiring).

When the signature log is sent from the user A side apparatus who was requesting sending of the signature log, the publishing organization side apparatus 104 preserves the signature log of the user A side apparatus received and the sender name "user A" in the signature log preservation area 817 by the signature log reception program 813 and extracts the record 1608 that is the same as the signature log sender "user A" for the item "verification object signer" (1604) of the verification status database 1601.

Next, the publishing organization side apparatus 104 examines the verification vicarious execution request 1702 (corresponding to 709 in Fig. 7; preserved in the verification vicarious execution request preservation area) corresponding to the item "verification ID" (= 000001) of the record 1608 and records "signature log: acquired" to the item "verification status" of the record 1608 of the verification status database 1601 when the range from the signature number "10" of the verification object signature annexed to the signature number "32" of the deposited publication signature log entry (preserved in the publication signature log entry preservation area) corresponding to the item "publication ID" (= 000142) of the record 1608 is contained in the signature log received by the signature log reception program.

The publishing organization side apparatus 104 executes the following signature verification processing for the verification request (verification vicarious execution request 1702 of the verification ID "000001" (corresponding to 709 in Fig. 7)) of the record 1608 described above at the timing at which the signature log necessary for verification is acquired. Though this embodiment uses this timing, the signature verification processing may be executed periodically for all the records.

In the signature verification processing, the publishing organization side apparatus 104 first extracts in S1501 the record 1608 having the same verification ID "000001" as the verification vicarious execution request 1702 (corresponding to 709 in Fig. 7) for which verification is to be made from now on and confirms the verification status. Since the verification status 1607 is "signature log: acquired", the flow proceeds to S1502.

In S1502, the publishing organization side apparatus 104 acquires the verification object signed document 1701 from the verification vicarious execution request 1702 (corresponding to 709 in Fig. 7) acquires the signature log that is the signature log of the item "verification object signer" (= "user A") of the record 1608 extracted in S1501 and contains the range from "signature number of verification object signature" (= "10") to "signature number of deposit publication signature log entry" (= "32") corresponding to the publication ID (= "000142") of the record 1608 from the signature log preservation area 817 of the publishing organization side apparatus 104.

The publishing organization side apparatus 104 acquires also the deposited publication signature log entry corresponding to the publication ID (= "000142") of the record 1608 from the publication signature log entry preservation area 818. The publishing organization side apparatus 104 executes the processing of S527, S528 and S529 shown in Fig. 5 by using the verification object signature, the signature log acquired as described above, the deposited publication signature log entry, the signature log of the publishing organization side apparatus 104 and the newspaper publication signature log entry in order to verify the verification object signature.

In S1503, the publishing organization side apparatus 104 creates a verification log (601) describing the data "verification object signature" used for verification in S1502, "signature log of signer side apparatus", "deposited publication signature log entry", "signature log of publishing organization side apparatus 104" and "newspaper publication signature log entry" and transmits the verification log 1703 (corresponding to 602 in Fig. 6 and 710 in Fig. 7) so created to the verification vicarious execution requester user "user B" side apparatus by looking up the item "requesting user name (mail address" (= "user B") of the record 1608.

Finally, the publishing organization side apparatus 104 records in S1504 "verification: finished" to the item "verification status" of the record 1608.

When receiving the verification log 1703 (corresponding to 601 in Fig. 6 and 710 in Fig. 7) for the contract of the user A by the verification vicarious execution service of the publishing organization side apparatus 104 described above, the user B side apparatus confirms that the verification object signature described in the verification log is coincident with the signature of the contract received from the user A side apparatus and that the deposited publication signature log entry described in the verification log is coincident with the record that is laid open to public by the publishing organization side apparatus 104 by looking up HP of the publishing organization side apparatus 104, etc, or that the newspaper publication signature log entry described in the verification log is coincident with the newspaper publication signature log entry put on the newspaper.

The verification log after confirmation is preserved in the verification log preservation log area 217 of the user B side apparatus or in the verification log preservation area 820 of the publishing organization side apparatus 104. In this way, the user B side apparatus can represent authenticity of the signature by means of the verification log preserved therein without relying on the user A side apparatus.

It should be further understood by those skilled in the art that although the foregoing description has been made on embodiments of the invention, the invention is not limited thereto and various changes and modifications may be made within the scope of the appended claims.

## Claims

1. A verification result recording method for creating a verification log recording information about verification of a signature in a signature system including a signer side apparatus (A), a verifier side apparatus (B) and a publishing organization side apparatus (104), wherein:
said signer side apparatus (101-103) records a signature log entry (312-315) relating to a signature, created as a signer side signature log (311, 502) with a chain relation;
said publishing organization side apparatus (104) publicizes said signature log entry deposited from said signer side apparatus, records a plurality of signature log entries deposited, as a publishing organization side signature log (410, 517) with a chain relation, and publicizes a predetermined signature log entry in said publishing organization side signature log as a newspaper publication signature log entry (526); and
said verifier side apparatus (101-103) verifies matching of the chain relation among said signatures from said newspaper publication signature log entry (526) to said signature log entry deposited by said signer side apparatus for publication by using said publishing organization side signature log (410,517), verifies matching of the chain relation among said signatures from said signature log entry deposited by said signer side apparatus for publication to said signature log entry (503) relating to a verification object signature (501) by using said signer side signature log (301,502), and records the data used for said verification as a verification log (601).

2. A verification result recording method according to claim 1, wherein said data recorded in said verification log (601) and utilized for said verification includes said verification object signature (501), said signer side signature log (311,502), said publishing organization side signature log (410,517) and said newspaper publication signature log entry (526).

3. A verification result recording method according to claim 2, which includes the steps of:
extracting said verification object signature (501), said signer side signature log (311,502), said publishing organization side signature log (410,517) and said newspaper publication signature log entry (526) as the data utilized for said verification from said verification log (601);
verifying matching of the chain relation among said signatures from said newspaper publication signature log entry to said signature log entry relating to said verification object signature by utilizing said data utilized for said verification and so extracted; and
verifying said verification log.

4. A verifier side apparatus for executing signature verification, **characterized by** means for performing:
a reception processing for verifying a verification object signature (501) by using a public key of a signer;
a verification processing for verifying a chain relation from a newspaper publication signature log entry (526) as a starting point to said verification object signature by using a signer side signature log (311, 502) and a publishing organization side signature log (410,517); and
a verification record preservation processing by creating a verification log (601) from data used for said verification processing and recording said verification log.

5. A publishing organization side apparatus for executing a reliability improvement processing of a signature, **characterized by** means for performing:
a publication processing for publicizing a signature log entry deposited from a signer side apparatus (101-103);
a publication reminder processing for urging said signer side apparatus to publicize said signature log entry;
a publication notice processing for notifying said signer side apparatus of publication of a signature log entry deposited from other signer side apparatus; and
a verification vicarious execution processing for verifying a verification object signature (501) by collecting data necessary for verification in place of said signer side apparatus, creating a verification log (601) and notifying a verification result.

6. A publishing organization side apparatus according to claim 5, wherein said performing means is adapted to execute, as said publication processing:
a publication processing for publicizing a signature log entry deposited from said signer side apparatus (101-103) for publication;
a publication information registration processing for recording information relating to said signature log entry publicized;
a notice request existence/absence confirmation processing for confirming whether or not a publication notice request is received from other signer side apparatus as to said signature log entry publicized; and
a publication notice processing for giving a notice to said other signer side apparatus when said publication notice request is received as to said signature log entry publicized.

7. A publishing organization side apparatus according to claim 5, wherein said performing means is adapted to execute, as said publication reminder processing:
an object extraction processing for specifying a signer to which publication of said signature log entry is to be urged:
a reminder transmission processing for transmitting a reminder document urging publication of said signature log entry to said signer side apparatus (101-103) utilized by said signer specified; and
a reminder information registration processing for recording transmission of said reminder document.

8. A publishing organization side apparatus according to claim 5, wherein said performing means is adapted to execute, as said publication notice processing:
a notice request content registration processing for receiving said publication notice request from said other signer side apparatus (101-103) and registering the content of said publication notice request to a database (815);
a notice requesting party extraction processing for extracting information of said other signer side apparatus as a notice requesting party from said database registering the content of said notice request; and
a notice transmission processing for notifying said other signer side apparatus as said notice requesting party of publication of said publication signature log entry by said notice request object signer.

9. A publishing organization side apparatus according to claim 5, wherein said performing means is adapted to execute, as said verification vicarious execution processing :
a verification vicarious execution request reception processing for receiving a request of verification vicarious execution from said signer side apparatus (101-103);
a verification data collection processing for collecting a publication signature log entry and a signature log necessary for verification for said verification object signature for which verification is requested;
a signature verification processing for verifying said verification object signature for which verification is requested, by using the data collected by said verification data collection processing;
a verification log creation processing for creating the verification log (601) recording said verification result and the data used for said verification and sending said verification log to said signer side apparatus as a verification requesting party;
a verification status registration processing for recording a verification status to a database (816) for said verification object signature requested; and
a verification status confirmation processing for confirming said verification status for said verification vicarious execution processing requested.

## Patentansprüche

1. Verifikationsergebnis-Aufzeichnungsverfahren zur Erzeugung eines Verifikationsprotokolls, das Informationen über die Verifikation einer Signatur in einem Signatursystem aufzeichnet, das eine unterzeichnerseitige Vorrichtung (A), eine verifiziererseitige Vorrichtung (B) und eine publikationsorganisationsseitige Vorrichtung (104) enthält, wobei
die unterzeichnerseitige Vorrichtung (101-103) einen eine Signatur betreffenden Signaturprotokolleintrag (312-315) aufzeichnet, wobei ein unterzeichnerseitiges Signaturprotokoll (311, 502) mit Verkettungsbeziehung erzeugt wird,
die publikationsorganisationsseitige Vorrichtung (104) den von der unterzeichnerseitigen Vorrichtung abgelegten Signaturprotokolleintrag publiziert, eine Vielzahl abgelegter Signaturprotokolleinträge als publikationsorganisationsseitiges Signaturprotokoll (410, 517) mit Verkettungsbeziehung aufzeichnet und einen vorbestimmten Signaturprotokolleintrag in dem publikationsorganisationsseitigen Signaturprotokoll als Zeitungspublikationssignaturprotokolleintrag (526) veröffentlicht, und
die verifiziererseitige Vorrichtung (101-103) unter Verwendung des publikationsorganisationsseitigen Signaturprotokolls (410, 517) das Zusammenpassen der Verkettungsbeziehung zwischen den Signaturen aus dem Zeitungspublikationssignaturprotokolleintrag (526) mit dem von der unterzeichnerseitigen Vorrichtung zur Publikation abgelegten Signaturprotokolleintrag verifiziert, unter Verwendung des unterzeichnerseitigen Signaturprotokolls (311, 502) das Zusammenpassen der Verkettungsbeziehung zwischen den Signaturen des von der unterzeichnerseitigen Vorrichtung zur Publikation abgelegten Signaturprotokolleintrags mit dem eine Signatur (501) als Verifikationsobjekt betreffenden Signaturprotokolleintrag (503) verifiziert und die für die Verifikation verwendeten Daten als Verifikationsprotokoll (601) aufzeichnet.

2. Verfahren nach Anspruch 1, wobei die im Verifikationsprotokoll (601) aufgezeichneten und für die Verifikation verwendeten Daten die Signatur (501) als Verifikationsobjekt, das unterzeichnerseitige Signaturprotokoll (311, 502), das publikationsorganisationsseitige Signaturprotokoll (410, 517) und den Zeitungspublikationssignaturprotokolleintrag (526) enthalten.

3. Verfahren nach Anspruch 2 mit folgenden Schritten:
Gewinnen der Signatur (501) als Verifikationsobjekt, des unterzeichnerseitigen Signaturprotokolls (311, 502), des publikationsorganisationsseitigen Signaturprotokolls (410, 517) und des Zeitungspublikationssignaturprotokolleintrags (526) als Daten, die für die Verifikation verwendet werden, aus dem Verifikationsprotokoll (601),
Verifizieren des Zusammenpassens der Verkettungsbeziehung zwischen den Signaturen aus dem Zeitungspublikationssignaturprotokolleintrag mit dem die Signatur als Verifikationsobjekt betreffenden Signaturprotokolleintrag unter Verwendung der für die Verifikation verwendeten und so gewonnenen Daten, und
Verifizieren des Signaturprotokolls.

4. Verifiziererseitige Vorrichtung zur Ausführung einer Signaturverifikation, **gekennzeichnet durch** Einrichtungen zur Ausführung
eines Empfangsprozesses zur Verifikation einer Signatur (501) als Verifikationsobjekt unter Verwendung eines öffentlichen Schlüssels eines Unterzeichners,
eines Verifikationsprozesses zur Verifikation einer Verkettungsbeziehung von einem Zeitungspublikationssignaturprotokolleintrag (526) als Ausgangspunkt zu der genannten Signatur als Verifikationsobjekt unter Verwendung eines unterzeichnerseitigen Signaturprotokolls (311, 502) und eines publikationsorganisationsseitigen Signaturprotokolls (410, 517) und
eines Verifikationsaufzeichnungsbewahrungsprozesses durch Erzeugen eines Verifikationsprotokolls (601) aus für die Verifikationsbearbeitung verwendeten Daten und Aufzeichnen des Verifikationsprotokolls.

5. Publikationsorganisationsseitige Vorrichtung zur Ausführung eines Prozesses zur Verbesserung der Verläßlichkeit einer Signatur, **gekennzeichnet durch** Einrichtungen zur Ausführung
eines Publikationsprozesses zur Publikation eines von einer unterzeichnerseitigen Vorrichtung (101-103) abgelegten Signaturprotokolleintrags,
eines Publikationserinnerungsprozesses, um die unterzeichnerseitige Vorrichtung aufzufordern, den Signaturprotokolleintrag zu veröffentlichen,
eines Publikationsbenachrichtigungsprozesses zur Benachrichtigung der unterzeichnerseitigen Vorrichtung von der Publikation eines von einer anderen unterzeichnerseitigen Vorrichtung abgelegten Signaturprotokolleintrags, und
eines Verifikationshilfsausführungsprozesses zur Verifizierung einer Signatur (501) als Verifikationsobjekt **durch** Sammeln von zur Verifikation notwendigen Daten anstelle der unterzeichnerseitigen Vorrichtung, Erzeugungen eines Verifikationsprotokolls (601) und Mitteilen eines Verifikationsergebnisses.

6. Vorrichtung nach Anspruch 5, wobei die Ausführungseinrichtung eingerichtet ist, als Publikationsprozeß folgendes auszuführen:
einen Publikationsprozeß zur Publikation eines von der unterzeichnerseitigen Vorrichtung (101-103) zur Publikation abgelegten Signaturprotokolleintrags,
einen Publikationsinformationsregistrierungsprozeß zur Aufzeichnung von Informationen über den publizierten Signaturprotokolleintrag,
einen Prozeß zur Bestätigung des Vorhandenseins oder Fehlens einer Benachrichtigungsanfrage, um zu bestätigen, ob von der anderen unterzeichnerseitigen Vorrichtung eine Publikationsbenachrichtigungsanfrage wegen des publizierten Signaturprotokolleintrags empfangen wird oder nicht, und
einen Publikationsbenachrichtigungsprozeß, um die andere unterzeichnerseitige Vorrichtung zu benachrichtigen, wenn die Publikationsbenachrichtigungsanfrage über den publizierten Signaturprotokolleintrag empfangen wird.

7. Vorrichtung nach Anspruch 5, wobei die Ausführungseinrichtung eingerichtet ist, als Publikationserinnerungsprozeß folgendes auszuführen:
einen Objektgewinnungsprozeß zur Bezeichnung eines Unterzeichners, der zur Publikation des Signaturprotokolleintrags veranlaßt werden soll,
einen Erinnerungsübermittlungsprozeß zur Übermittlung eines Erinnerungsdokuments, das zur Publikation des Signaturprotokolleintrags auffordert, an die vom bezeichneten Unterzeichner verwendete unterzeichnerseitige Vorrichtung (101-103), und
einen Erinnerungsinformationsregistrierungsprozeß zur Aufzeichnung der Übermittlung des Erinnerungsdokuments.

8. Vorrichtung nach Anspruch 5, wobei die Ausführungseinrichtung eingerichtet ist, als Publikationsbenachrichtigungsprozeß folgendes auszuführen:
einen Benachrichtigungsanfrageinhaltsregistrierungsprozeß zum Empfang der Publikationsbenachrichtigungsanfrage von der anderen unterzeichnerseitigen Vorrichtung (101-103) und zur Registrierung des Inhalts der Publikationsbenachrichtigungsanfrage in einer Datenbank (815),
einen Gewinnungsprozeß für eine eine Benachrichtigung verlangende Partei, um Informationen über die andere unterzeichnerseitige Vorrichtung als eine eine Benachrichtigung verlangende Partei aus der Datenbank zu gewinnen, die den Inhalt der Benachrichtigungsanforderung registriert, und
einen Benachrichtigungsübermittlungsprozeß zur Benachrichtigung der anderen unterzeichnerseitigen Vorrichtung als benachrichtigungsanfordernde Partei über die Publikation des Publikationssignaturprotokolleintrags durch den Unterzeichner als Objekt der Benachrichtigungsanfrage.

9. Vorrichtung nach Anspruch 5, wobei die Ausführungseinrichtung eingerichtet ist, als Verifikationshilfsausführungsprozeß folgendes auszuführen:
einen Verifikationshilfsausführungsanforderungsempfangsprozeß zum Empfang einer Anforderung für eine Verifikationshilfsausführung von der unterzeichnerseitigen Vorrichtung (101-103),
einen Verifikationsdatensammelprozeß zum Sammeln eines Publikationssignaturprotokolleintrags und eines Signaturprotokolls, die zur Verifikation der Signatur als Verifikationsobjekt, für die eine Verifikation verlangt wird, notwendig sind,
einen Signaturverifikationsprozeß zur Verifikation der Signatur als Verifikationsobjekt, für die eine Verifikation verlangt wird, indem die vom Verifikationsdatensammelprozeß gesammelten Daten verwendet werden,
einen Verifikationsprotokollerzeugungsprozeß zur Erzeugung des Verifikationsprotokolls (601), das das Verifikationsergebnis und die für die Verifikation verwendeten Daten aufzeichnet, und zum Senden des Verifikationsprotokolls an die unterzeichnerseitige Vorrichtung als eine eine Verifikation verlangende Partei,
einen Verifikationsstatusregistrierungsprozeß zur Registrierung eines Verifikationsstatus in einer Datenbank (816) für die verlangte Signatur als Verifikationsobjekt, und
einen Verifikationsstatusbestätigungsprozeß zur Bestätigung des Verifikationsstatus für den verlangten Verifikationshilfsausführungsprozeß.

## Revendications

1. Procédé d'enregistrement de résultats de vérification pour créer un journal de vérification enregistrant des informations concernant la vérification d'une signature dans un système de signature incluant un dispositif côté signataire (A), un dispositif côté vérificateur (B), et un dispositif côté organisation de publication (104), dans lequel :
ledit dispositif côté signataire (101-103) enregistre une entrée de journal de signature (312-315) concernant une signature, créée en tant que journal de signature du côté signataire (311, 502) avec une relation de chaîne,
ledit dispositif du côté organisation de publication (104) publie ladite entrée du journal de signature déposée par ledit dispositif côté signataire, enregistre une pluralité d'entrées du journal de signature déposées sous forme d'un journal de signature du côté organisation de publication (410, 517) avec une relation de chaîne, et publie une entrée de journal de signature prédéterminée dans ledit journal de signature du côté organisation de publication sous forme d'une entrée de journal de signature de publication de quotidien (526), et
ledit dispositif côté vérificateur (101-103) vérifie la correspondance de la relation de chaîne entre lesdites signatures depuis ladite entrée du journal de signature de publication de quotidien (526) jusqu'à ladite entrée de journal de signature déposée par ledit dispositif côté signataire pour une publication en utilisant ledit journal de signature du côté organisation de publication (410, 517), vérifie la correspondance de la relation de chaîne entre lesdites signatures depuis ladite entrée de journal de signature déposée par ledit dispositif côté signataire pour la publication jusqu'à ladite entrée de journal de signature (503) concernant une signature objet de la vérification (501) en utilisant ledit journal de signature du côté signataire (311, 502), et enregistre les données utilisées pour ladite vérification sous forme d'un journal de vérification (601).

2. Procédé d'enregistrement de résultats de vérification selon la revendication 1, dans lequel lesdites données enregistrées dans ledit journal de vérification (601) et utilisées pour ladite vérification incluent ladite signature objet de la vérification (501), ledit journal de signature du côté signataire (311, 502), ledit journal de signature côté organisation de publication (410, 517) et ladite entrée de journal de signature de publication de quotidien (526).

3. Procédé d'enregistrement de résultats de vérification selon la revendication 2, qui inclut les étapes consistant à :
extraire ladite signature objet de la vérification (501), ledit journal de signature du côté signataire (311, 502), ledit journal de signature du côté organisation de publication (410, 517) et ladite entrée de journal de signature de publication de quotidien (526) en tant que données utilisées pour ladite vérification depuis ledit journal de vérification (601),
vérifier la correspondance de la relation de chaîne entre lesdites signatures depuis ladite entrée de journal de signature de publication de quotidien jusqu'à ladite entrée de journal de signature concernant ladite signature objet de la vérification en utilisant lesdites données utilisées pour ladite vérification et ainsi extraites, et
vérifier ledit journal de vérification.

4. Dispositif côté vérificateur pour exécuter une vérification de signature, **caractérisé par** des moyens pour exécuter :
un traitement de réception pour vérifier une signature objet de la vérification (501) en utilisant une clé publique d'un signataire,
un traitement de vérification pour vérifier une relation de chaîne depuis une entrée de journal de signature de publication de quotidien (526) en tant que point de départ jusqu'à ladite signature objet de la vérification en utilisant un journal de signature du côté signataire (311, 502) et un journal de signature du côté organisation de publication (410, 517) et
un traitement de conservation d'enregistrement de vérification en créant un journal de vérification (601) à partir des données utilisées pour ledit traitement de vérification et en enregistrant ledit journal de vérification.

5. Dispositif côté organisation de publication pour exécuter un traitement d'amélioration de fiabilité d'une signature, **caractérisé par** des moyens pour exécuter :
un traitement de publication pour publier une entrée de journal de signature déposée par un dispositif côté signataire (101-103),
un traitement de rappel de publication pour inciter ledit dispositif côté signataire à publier ladite entrée du journal de signature,
un traitement d'avis de publication pour informer ledit dispositif côté signataire de la publication d'une entrée du journal de signature déposée par un autre dispositif côté signataire, et
un traitement d'exécution de vérification par délégation pour vérifier une signature objet de la vérification (501) en collectant des données nécessaires pour la vérification à la place dudit dispositif côté signataire, créer un journal de vérification (601) et notifier un résultat de vérification.

6. Dispositif côté organisation de publication selon la revendication 5, dans lequel lesdits moyens d'exécution sont adaptés pour exécuter, en tant que ledit traitement de publication :
un traitement de publication pour publier une entrée de journal de signature déposée par ledit dispositif du côté du signataire (101-103) en vue d'une publication,
un traitement d'enregistrement d'informations de publication pour enregistrer des informations concernant ladite entrée de journal de signature publiée,
un traitement de confirmation d'existence/absence de demande d'avis pour confirmer si oui ou non une demande d'avis de publication est reçue en provenance d'un autre dispositif côté signataire concernant ladite entrée de journal de signature publiée, et
un traitement d'avis de publication pour donner un avis audit autre dispositif du côté signataire lorsque ladite demande d'avis de publication est reçue concernant ladite entrée de journal de signature publiée.

7. Dispositif côté organisation de publication selon la revendication 5, dans lequel lesdits moyens d'exécution sont adaptés pour exécuter, en tant que ledit traitement de rappel de publication :
un traitement d'extraction d'objet pour spécifier un signataire auquel la publication de ladite entrée du journal de signature doit être recommandée,
un traitement de transmission de rappel pour transmettre un document de rappel incitant à la publication de ladite entrée de journal de signature audit dispositif côté signataire (101-103) utilisé par ledit signataire spécifié, et
un traitement d'enregistrement d'informations de rappel pour enregistrer une transmission dudit document de rappel.

8. Dispositif côté organisation de publication selon la revendication 5, dans lequel lesdits moyens d'exécution sont adaptés pour exécuter en tant que ledit traitement d'avis de publication :
un traitement d'enregistrement de contenu de demande d'avis pour recevoir ladite demande d'avis de publication en provenance dudit autre dispositif du côté signataire (101-103) et enregistrer le contenu de ladite demande d'avis de publication dans une base de données (815),
un traitement d'extraction de partie de demande d'avis pour extraire des informations dudit autre dispositif du côté signataire en tant que partie de demande d'avis depuis ladite base de données enregistrant le contenu de ladite demande d'avis, et
un traitement de transmission d'avis pour informer ledit autre dispositif du côté signataire en tant que ladite partie de demande d'avis de la publication de ladite entrée de journal de signature de publication par l'intermédiaire dudit signataire objet de la demande d'avis.

9. Dispositif du côté de l'organisation de publication selon la revendication 5, dans lequel lesdits moyens d'exécution sont adaptés pour exécuter, en tant que ledit traitement d'exécution de vérification par délégation :
un traitement de réception de demande d'exécution de vérification par délégation pour recevoir une demande d'exécution de vérification par délégation en provenance dudit dispositif du côté signataire (101-103),
un traitement de collecte de données de vérification pour collecter une entrée de journal de signature de publication et un journal de signature nécessaire en vue de la vérification pour ladite signature objet de la vérification pour laquelle une vérification est demandée,
un traitement de vérification de signature pour vérifier ladite signature objet de la vérification pour laquelle une vérification est demandée, en utilisant les données collectées par ledit traitement de collecte de données de vérification,
un traitement de création de journal de vérification pour créer le journal de vérification (601) enregistrant ledit résultat de vérification et les données utilisées pour ladite vérification et envoyer ledit journal de vérification audit dispositif du côté signataire en tant que partie de demande de vérification,
un traitement d'enregistrement d'état de vérification pour enregistrer un état de vérification dans une base de données (816) pour ladite signature objet de la vérification demandée, et
un traitement de confirmation d'état de vérification pour confirmer ledit état de vérification pour ledit traitement d'exécution de vérification par délégation demandé.
